Europäisches Patentamt

(19) European Patent Office

Office européen des brevets

(11) Publication number: **0 024 315**
**B1**

(12) # EUROPEAN PATENT SPECIFICATION

(45) Date of publication of patent specification: **26.09.84**

(51) Int. Cl.³: **C 08 C 19/02**

(21) Application number: **80104471.0**

(22) Date of filing: **29.07.80**

(54) **Hydrogenated high vinyl polybutadiene.**

(30) Priority: **20.08.79 US 68309**

(43) Date of publication of application:
**04.03.81 Bulletin 81/09**

(45) Publication of the grant of the patent:
**26.09.84 Bulletin 84/39**

(84) Designated Contracting States:
**BE DE FR GB IT NL SE**

(56) References cited:
**FR-A-2 219 219**
**FR-A-2 228 105**
**US-A-4 025 478**

**JOURNAL OF POLYMER SCIENCE, part C no. 4,
1964, Interscience New York US E. SUSA:
"Cobalt catalysts for preparing syndiotactic
1,2-polybutadiene", pages 399-410**

(73) Proprietor: **THE FIRESTONE TIRE & RUBBER
COMPANY
1200 Firestone Parkway
Akron, Ohio 44317 (US)**

(72) Inventor: **Halasa, Adel Farhan
5040 Everett Road
Bath Ohio 44210 (US)**
Inventor: **Carlson, David Wayne
1603 Larch Street
Akron Ohio 44301 (US)**
Inventor: **Hall, James Edward
2940 Mayfair Road
Akron Ohio 44312 (US)**

(74) Representative: **Kraus, Walter, Dr. et al
Patentanwälte Kraus & Weisert Irmgardstrasse
15
D-8000 München 71 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the production of elastomeric hydrogenated polybutadiene. More specifically it relates to an elastomer of controlled molecular weight and of desired branching in the microstructure. Still more specifically it relates to an elastomeric polybutadiene having good resistance to oxidation and stability against ozone.

The most pertinent references found with regard to hydrogenated products of polybutadienes having substantial amounts of 1,2-microstructure are the articles by E. W. Duck et al which appeared in "Journal of the IRI", pages 223—227 of the October, 1968 issue and pages 19—22 of the February, 1972 issue. However, neither of these publications show the hydrogenation of polybutadienes having more than 60% vinyl structure.

US—A—3,451,988 shows a method for preparing polybutadiene having higher amounts of 1,2-microstructure. However, there is no reference to hydrogenation of such products nor is there any indication of the properties or type of products produced by such hydrogenation.

FR—A—2 228 105 discloses compositions comprising hydrogenated polybutadiene derived from polybutadiene having 20—90% 1,2-microstructure. FR—2 219 219 describes compositions comprising a polymer of molecular weight between 30,000 and 200,000 which is hydrogenated polybutadiene, whereas US—A—4 025 478 discloses compositions comprising hydrogenated polymers derived from polybutadiene having 50—95% 1,2-microstructure.

It would be expected that complete hydrogenation of a polymer containing substantially 100% 1,2-microstructure would produce a product similar to polybutene-1, which is available commercially as a tough plastic or resin suitable for molding or for extruding into pipe, etc. Such polybutene-1 products are described in a bulletin published by Skeist Laboratories, Inc. of Livingston, New Jersey, on pages 77—81 of a section headed "Specialty Polymers." These tough resins are also described in recent textbooks on polymers, such as "Organic Polymer Chemistry" by K. J. Saunders, first published in 1973 by Chapman & Hall (London), distributed by John Wiley & Sons (New York), pp. 67—68.

In accordance with the present invention it has been found that elastomers of good oxidation resistance, of good stability against ozone, good tacticity and crystallinity and of controlled molecular weight may be prepared by the hydrogenation of polybutadienes of controlled molecular weight having 95—100% 1,2-microstructure. The starting high vinyl polybutadiene may be prepared by any method suitable for this purpose but it has been found particularly effective to produce these high vinyl polybutadienes by an anionic catalyst system which gives control over the molecular weight produced. Particularly suitable for this purpose is an alkyl lithium catalyst modified with a chelating bifunctional Lewis base such as 1,2-di-(N-methyl-piperazinyl-N')-ethane (DMPE).

The hydrogenation is effected by any appropriate method capable of hydrogenating 95—100% of the original unsaturation leaving residual unsaturation of 0—5%.

A particularly suitable catalyst system for this purpose comprises a combination of nickel, cyclohexene and triisobutyl aluminum as described more fully below.

The hydrogenated high vinyl polybutadiene of this invention is particularly resistant to degradation by oxidation or ozone reaction. Since the high vinyl structure of the polybutadiene has little or no unsaturation in the linear chain, there is little likelihood that oxidation or ozone reaction will cause rupture of the linear chain. This resistance to oxidation and to ozone reaction is evident in the hydrogenated product by the accompanying resistance to degradation of the polymer chains.

Moreover, since the anionic polymerization system permits close control of the molecular weight of the starting high vinyl polybutadine, this means that the molecular weight of the ultimate product may be similarly controlled since the molecular weight of the hydrogenated product is substantially that of the starting high vinyl polymer. The molecular weight ($M_n$) of the hydrogenated product is from above 200,000 to 1,000,000.

The hydrogenated high vinyl polybutadienes of this invention have high tack and high green strength similar to natural rubber. Moreover these new polymers have the low rebound and low air permeability characteristic of butyl rubber. Therefore these hydrogenated polymers combine desirable properties of both natural rubber and butyl rubber.

The following typical procedure is used to prepare the high vinyl polybutadiene: A cleaned 7.6 1 (2-gallon) stainless steel reactor equipped with stirrer, appropriate heating and cooling means, and appropriate inlets and outlets is prepared for reaction by filling it under a nitrogen atmosphere with hexane and adding n-butyl lithium in an amount sufficient to react with impurities in the hexane and on the surface of the reactor. The mixture is stirred and heated to 65°C (150°F) for about one hour. Then this mixture is drained under a nitrogen atmosphere and the material discarded. Next 3.4 kg (7.5 lbs.) of a blend containing 24% 1,3-butadiene (817 g butadiene) and 76% of hexane is charged to the reactor under nitrogen and cooled to 5°C (41°F) before adding 16.5 millimoles of n-butyl lithium and 33 mili-moles of 1,2-di-(N-methyl-piperzinyl-N')-ethane (DMPE). The temperature is maintained at 5°C (41°F) and efficient stirring effected. After about 8 hours of reaction, the product is dropped into a large volume of isopropanol containing an antioxidant. The precipitated product is recovered and drum-dried to give substantially 100% yield of a polymer having a molecular weight of about 50,000 $M_n$ and a 1,2 content of substantially 100%.

The molecular weight may be increased by decreasing the amount of n-butyl lithium and decreased by increasing the amount of n-butyl lithium, advantageously with appropriate changes in the amount of DMPE to give a DMPE/Li ratio of approximately 2. This method of varying or controlling the molecular weight by varying the amount of catalyst used per mole of monomer is well known in the anionic polymerization art.

The polymerization temperature has an effect on the 1,2 content of the product with increase in temperature within limits decreasing the 1,2 content, and vice versa within limits. It is generally desirable to maintain a temperature no higher than 5°C (41°F) to obtain maximum 1,2 content as shown by the following table:

| Temperature | | Approximate 1,2 Content |
|---|---|---|
| Below | 5°C (41°F) | 100% |
| | 5°C (41°F) | 99.8% |
| | 9°C (48°F) | 98% |
| | 24°C (75°F) | 97% |
| | 29°C (85°F) | 95% |
| | 32°C (90°F) | 90% |
| Above | 32°C (90°F) | Less than 90% |

The high vinyl polybutadiene (1200 g) is dissolved in 18.9 l (5 gallons) of toluene. This polymer solution is transferred to a stainless steel reactor equipped with means for stirring, heating and cooling and with inlet and outlet means. Additional 3.8 l (1 gallon) of toluene is added to the original mixing container to dissolve any residue of polymer and the resulting solution is also added to the reactor. The reactor is sealed and heated to 55°C (130°F) with stirring and sufficient vacuum is applied to remove any dissolved gases. Then the free space in the reactor is flushed twice with $H_2$ to 3.4 bar (50 psi). After each flushing, vacuum is again applied to remove traces of dissolved gases. Then, with a hydrogen atmosphere maintained, the hydrogenation catalyst is added which comprises Ni/cyclohexene/triiso-butyl aluminum in the molar ratio of 1/1/3—4 and 25—5 millimoles of Ni per 100 g of polymer. After the catalyst is added the temperature is raised to 77—88°C (170—190°F) and hydrogen introduced to 10.3 bar (150 psi). Since the hydrogenation is diffusion controlled, rapid stirring is effected. When the hydrogen pressure drops to 5.2—6.9 bar (75—100 psi), the reactor is repressurized with hydrogen to 10.3 bar (150 psi). Generally hydrogenation is complete in 7—10 hours to 90—90% hydrogenation of the unsaturation.

The following Table I compares various properties of typical unhydrogenated polybutadienes, both low and high-vinyl, with the corresponding hydrogenated products and also with commercial poly-butene-1:

TABLE I

| | Unhydrogenated | | | Hydrogenated | |
|---|---|---|---|---|---|
| | Low Vinyl 10% | High Vinyl 97—100% | Commercial Polybutene-1 | Low Vinyl 10% | High Vinyl 97—100% |
| Type of Product | Rubbery | Rubbery | Plastic | Plastic | Rubbery |
| Green Strength | None | Poor | Good | Good | Very Good |
| Tack | None | 0.45 kg (1 lb.) | None | — | 5.443—8.165 kg (12—18 lbs.) |
| Ozone Reaction | High & Fast | Oxidizes & Crosslinks | — | Low reaction | Very resistant |
| Tg | −100°C | −5° to 0°C | — | — | −30° to −25°C |
| Mo. Wt. | 250,000 | 250,000 | — | 250,000 | 250,000 |
| Tensile Strength | Poor | 20.6—27.5 bar (300—400 psi) | — | — | 55.0—61.9 bar (800—900 psi) |
| Elasticity | Good | Good | None | Poor | Good |
| Use | Tires | Plastics Adhesives | Plastics | Plastics | Tires |
| $T_m$ | — | None | +135°C | 90—100°C | None |

The following Table II shows a comparison of the tack for two polymers of comparable molecular weight and compounded similarly with standard modifiers, one being a polybutadiene of about 95%, 1,2-microstructure and the other of 80.0% 1,2, and both being hydrogenated to about the same degree.

TABLE II

| | A | B |
|---|---|---|
| 1,2 Content (%) | 95.5 | 80.0 |
| % Hydrogenated | 89 | 87 |
| Wind-up Tack kg (lbs.) X vs. X | 5.9 (13) | 1.7 (4) |
| O vs. O | 5.9 (13) | 2.0 (4.4) |
| Average | 5.9 (13) | 1.9 (4.2) |

The hydrogenated polymers of this invention have been found to be an excellent substitute in tire compositions for the relatively expensive natural rubber. For example, a series of experiments are performed using six individual samples of hydrogenated polybutadiene, the polybutadiene having 99% 1,2 content and hydrogenation is effected on 95% of the unsaturation. Six samples of the hydrogenated polymer are used, varying in molecular weight from 67,000 to 350,000. The formulation comprises 60 parts by weight of hydrogenated high vinyl polybutadiene, 20 parts by weight of emulsion prepared styrene-butadiene rubber (SBR) and 20 parts by weight of solution prepared styrene-butadiene rubber (SBR), together with standard modifiers such as carbon black, ZnO, stearic acid, sulfur, etc. A control is also tested in which 60 parts by weight of natural rubber is used in place of the hydrogenated polybutadiene. In running the comparative tests the green stock is aged 5 days in each case.

These comparative tests show the following results:

1. The green strength properties of the hydrogenated polybutadienes increase with increase in molecular weight and compare favorably with the control.

2. Young's Modulux index (YMI), a measure of wet traction, shows an improvement of the hydrogenated polybutadiene compositions over the control.

3. The rebound test shows an improvement in hysteresis as the molecular weight of the hydrogenated polybutadiene increases.

4. The strain-strain property increases with increase in molecular weight of the hydrogenated polybutadiene.

5. The aging properties are generally good as compared to the control.

6. The ring tensile cure at 149°C (300°F) to 100% modulus at 30 minutes is better than the natural rubber control.

7. Tensile strength of the hydrogenated polybutadiene is better than that for the natural rubber control.

8. The elongation of the hydrogenated polybutadiene is the same as for the natural rubber control.

9. The windup tack are approximately equivalent, 15 for the control and 14.5 for the hydrogenated polybutadiene.

10. The elongation is the same, 1250 for the control and 1250 for the hydrogenated polybutadiene.

Moreover, the air impermeability of the hydrogenated high vinyl polybutadiene is excellent and is as good as butyl rubber. For example, in comparable formulations with SBR, the hydrogenated polybutadiene formulations give an air permeability value (corrected to 0°C at 760 mm) of 2.720 to $3.0 \times 10^{-7}$ which can be compared with the value of $1.17 \times 10^{-7}$ for the butyl rubber control.

The hydrogenated products of this invention are particularly compatible and suitable for blending with polypropylene, polyethylene and polymers of other alpha-olefins to produce thermoplastic elastomers having excellent aging properties, ozone resistance and paint adhesion. "Thermoplastic elastomers" are elastomers which may be readily processed, extruded or molded by conventional thermoplastic methods and attain desirable physical properties without the necessity of vulcanization.

Satisfactory blending of the products of this invention with alpha-olefin polymers is particularly surprising in view of the fact that unhydrogenated polybutadiene, when blended with polypropylene and other polymeric alpha-olefins, gives materials having poor properties.

Advantageously, in preparing these blends the polymeric alpha-olefin has a melting point of at least 90°C and this material is used in a proportion of about 15—48 by weight of the resulting blend. These blends may be prepared by mixing the respective materials and heating the mixture to a temperature above the melting point of the polymeric alpha-olefin. The resulting blend may be reprocessed at any time by repeating the heating above the melting point of the polymeric alpha-olefin.

Advantageously the polymeric alpha-olefin should be predominantly of isotactic configuration with a melt flow index of about 0.4—30, preferably about 2—12 (ASTM No. D1238). As much as 15% atactic configuration in the polymeric alpha-olefin may be tolerated without adverse effect on the resulting products.

The polymeric alpha-olefin is preferably derived from propylene but may also comprise polymers or copolymers of monomers having 2—8 carbon atoms, such as ethylene, 1-butene, 1-pentene, 1-hexene, 1-heptene, 1-octene, 1-nonene, 4-methyl-pentene-1, 3-methyl-hexene-1, 5-methyl-heptene-1, etc. Advantageously the comonomers used in making the copolymers are other alpha-olefins. In any case, the polymers and copolymers are such as to have melting points above 90°C and to be predominantly of isotactic configuration.

The melting point for polypropylene is advantageously about 150—175°C, preferably 160°C. For polyethylene, the melting point range is advantageously about 127—140°C, preferably about 135°C.

To facilitate the mixing or blending of the components it is desirable that the polymeric alpha-olefin is used in particulate form, advantageously in sizes of at least 1 $\mu$m and preferably of at least 5 $\mu$m or even larger. The blending is advantageously effected on a mill or other conventional equipment such as Banbury, Brabender, screw extruder, etc.

## Claim

A polymeric composition having elastomeric properties and having improved resistance to aging characterized by comprising the hydrogenated product of a polybutadiene having 95—100 percent 1,2 microstructure, the unsaturation in said polybutadiene being at least 85 percent hydrogenated and the hydrogenated polybutadiene having a molecular weight of from above 200,000 to 1,000,000.

# 0 024 315

## Revendication

Composition polymérique douée de propriétés élastomériques et ayant une grande résistance au vieillissement, caractérisée en ce qu'elle comprend le produit hydrogéné d'un polybutadiène renfermant 95 à 100% de microstructure 1,2, l'insaturation dudit polybutadiène étant hydrogénée à 85% au moins et le polybutadiène hydrogéné ayant un poids moléculaire de 200 000 à 1 000 000.

## Patentanspruch

Polymere Masse mit elastomeren Eigenschaften und verbesserter Alterungsbeständigkeit, dadurch gekennzeichnet, daß sie das hydrierte Produkt eines Polybutadiens mit 95 bis 100% 1,2-Mikrostruktur enthält, wobei die Unsättigung in dem genannten Polybutadien mindestens 85% hydriert ist und das hydrierte Polybutadien ein Molekulargewicht von oberhalb 2000000 bis 1000000 hat.